# DEMANDE DE BREVET EUROPEEN

(11) **EP 2 210 777 A1**
(43) Date de publication de la demande: **28.07.2010**
(21) Numéro de dépôt: 10151789.4
(22) Date de dépôt: 27.01.2010
(51) Int. Cl.: B60R 5/04, B60R 7/04

(54) **Dispositif de support d'un moyen de transport à deux roues dans une partie arrière de l'habitacle d'un véhicule**

(30) Priorité: 27.01.2009 FR 0950483
(71) Demandeur: Peugeot Citroën Automobiles SA, 78140 Vélizy-Villacoublay (FR)
(72) Inventeur: Guigne Fabrice, 91470, LES MOLIERES (FR)

(57) **Abrégé**

Dispositif de support d'un moyen de transport à deux roues, tel qu'une bicyclette, dans une partie arrière (1) de l'habitacle d'un véhicule, notamment un véhicule automobile, comprenant une structure porteuse (6) amoviblement fixée au plancher (5) de la partie arrière (1) du véhicule et permettant de maintenir en position debout le moyen de transport, **caractérisé en ce que** la structure porteuse (6) peut être amoviblement fixée à des points d'ancrage préexistants sur le plancher (5) et destinés à la fixation d'un siège arrière individuel amovible préalablement retiré.

## Description

La présente invention concerne le domaine des dispositifs de support d'au moins une bicyclette en position debout à l'intérieur d'un véhicule automobile.

Elle est relative en particulier à un dispositif de support de bicyclette utilisant les points d'ancrage des sièges amovibles situés dans le plancher de véhicule.

Un tel dispositif est décrit, par exemple, dans le document US2001/0054632. Il comporte une structure à deux rails symétriques, parallèles reliés ensemble par des traverses, pouvant être longitudinalement fixés à des points d'ancrage situés dans le plancher du véhicule et correspondant aux points d'ancrage d'au moins un siège avant et un siège arrière du véhicule. Une bicyclette peut être fixée à l'un des rails d'une part par sa fourche avant sans roue solidaire, par l'intermédiaire d'un support, d'une extrémité du rail et d'autre part par un moyen de fixation de la roue arrière à l'autre extrémité du rail.

Ce dispositif connu est encombrant et peu pratique à mettre en place. En effet, il utilise huit points d'ancrage dans le plancher du véhicule, et nécessite d'enlever au moins un siège avant et un siège arrière aligné derrière le siège avant. De plus, la roue avant de la bicyclette doit être enlevée pour fixer la fourche de la bicyclette au rail de support correspondant.

La présente invention a notamment pour but de remédier aux inconvénients de l'état de la technique ci-dessus cité.

A cet effet, l'invention a pour objet un dispositif de support d'un moyen de transport à deux roues, tel qu'une bicyclette, dans une partie arrière de l'habitacle d'un véhicule, notamment un véhicule automobile, comprenant une structure porteuse amoviblement fixée au plancher de la partie arrière du véhicule et permettant de maintenir en position debout le moyen de transport, dans lequel la structure porteuse est destinée à supporter une roue du moyen de transport et peut être amoviblement fixée à des points d'ancrage préexistants sur le plancher et destinés à la fixation d'un siège arrière individuel amovible préalablement retiré.

La structure porteuse comprend deux barres parallèles pouvant être fixées amoviblement aux points d'ancrage transversalement à la direction longitudinale du véhicule de manière que l'une des roues du moyen de transport, notamment la roue arrière, puisse être positionnée et maintenue en position debout en appui sur et entre les deux barres de la structure porteuse.

La structure porteuse comprend deux éléments longilignes parallèles et rigides, amoviblement fixés par leurs deux extrémités sur les deux barres parallèles, la structure porteuse permettant d'enserrer la roue du moyen de transport entre les deux barres et les deux éléments longilignes.

Les deux éléments longilignes peuvent présenter relativement aux deux barres au moins deux positions, une position perpendiculaire ou une position inclinée.

Avantageusement, les deux éléments longilignes sont deux barreaux.

L'une des deux barres comporte au voisinage de ses deux extrémités respectivement deux pions de centrage pouvant être fixés amoviblement dans deux logements du plancher du véhicule constituant deux des points d'ancrage précités.

L'autre barre comprend au voisinage de chacune de ses extrémités une patte de retenue présentant au moins un doigt en forme de crochet pouvant être solidarisé amoviblement à une tige d'ancrage fixée transversalement sur le plancher du véhicule. La patte de retenue comprend deux doigts en forme de crochet se solidarisant amoviblement à deux tiges d'ancrage espacées et fixées transversalement au plancher du véhicule.

L'invention concerne également un véhicule comprenant un ou plusieurs dispositifs de support d'un moyen de transport tel qu'une bicyclette tel que défini précédemment fixés à des points d'ancrage préexistants du plancher destinés à la fixation d'un ou de plusieurs sièges arrière amovibles d'une même rangée préalablement retirés.

L'invention va maintenant être décrite plus en détail mais de façon non limitative en regard des figures annexées, dans lesquelles :
- la figure 1 représente une vue de dessus d'une partie arrière de l'habitacle d'un véhicule ;
- la figure 2 représente une vue de dessus d'un dispositif de support selon l'invention d'un moyen de transport tel qu'une bicyclette ;
- la figure 3 représente une variante de réalisation du dispositif de support de la figure 2 ;
- la figure 4 représente une vue agrandie en coupe suivant la ligne IV-IV de la figure 2 d'un pion de centrage du dispositif de support selon l'invention logé dans une traverse de caisse du véhicule ;
- la figure 5 représente une vue agrandie en coupe d'une patte de retenue fixée à deux tiges rigides du plancher du véhicule suivant la ligne V-V de la figure 2.

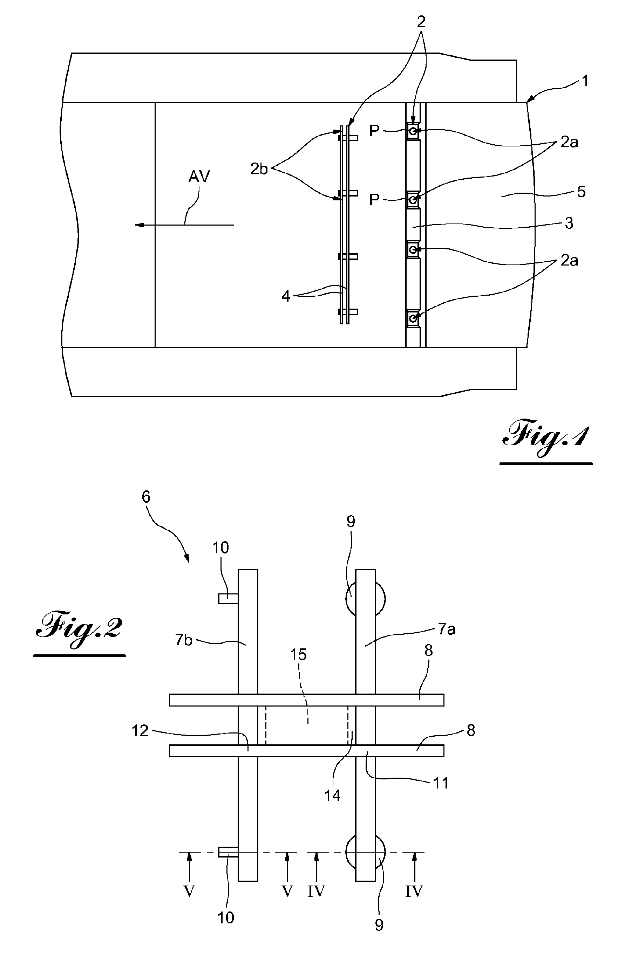

La figure 1 représente une vue de dessus d'une partie arrière 1 de l'habitacle d'un véhicule qui comprend un plancher de carrosserie du véhicule. L'avant du véhicule est symbolisé par la flèche AV. Le plancher est pourvu de points d'ancrage préexistants 2 destinés à la fixation de deux sièges arrière individuels amovibles non représentés du véhicule et appartenant à une même rangée.

Les points d'ancrage 2 de chaque siège arrière comprennent des premiers points d'ancrage arrière 2a et des deuxièmes points d'ancrage avant 2b.

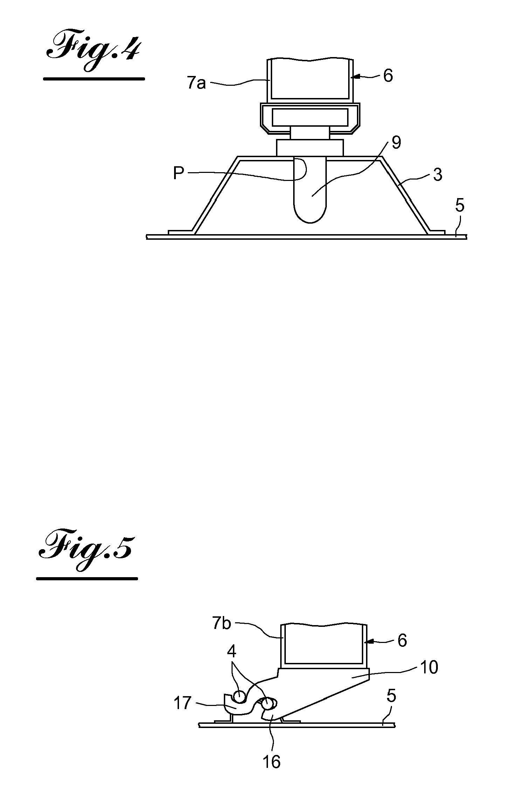

Selon un mode de réalisation préféré, les points d'ancrage 2a arrière d'un siège sont constitués par deux perçages P réalisés dans une traverse de rigidification 3 du plancher 5, comme cela ressort mieux de la figure 4.

Les points d'ancrage avant 2b sont constitués par deux tiges rigides 4 fixées au plancher 5 transversalement au véhicule, et par conséquent parallèlement à la traverse 3, à une distance prédéterminée. La distance prédéterminée peut être sensiblement égale au diamètre d'une roue d'une bicyclette. En variante, les tiges 4 peuvent être remplacées par des câbles solidaires du plancher 5 et tendus transversalement au véhicule.

La figure 1 montre que les tiges d'ancrage avant 4 s'étendent transversalement sur une longueur pour servir d'ancrage commun aux deux sièges arrière de la même rangée.

Bien entendu, le plancher 5 du véhicule peut comporter un nombre de points d'ancrage pour un seul siège arrière ou pour plus de deux sièges arrière d'une même rangée.

Les figures 2 à 5 représentent un dispositif de support selon l'invention d'un moyen de transport, tel qu'une bicyclette, en position debout sur le plancher 5 du véhicule.

Ce dispositif comprend une structure porteuse 6 comportant deux barres 7a et 7b parallèles rigides, destinées à être amoviblement fixées aux premiers et deuxièmes points d'ancrage 2a et 2b préexistants du plancher 5, et deux éléments longilignes 8 rigides et parallèles, et reliés aux deux barres 7a et 7b.

Les deux barres 7a et 7b lorsque fixées par les points d'ancrage 2 au plancher 5 s'étendent transversalement à la direction longitudinale du véhicule. La barre arrière 7a comporte au voisinage de chacune de ses deux extrémités un pion de centrage 9. La barre avant 7b comprend au voisinage de ses deux extrémités respectivement deux pattes de retenue 10 perpendiculaires à la barre 7b et sous celle-ci. Les deux pattes de retenue 10 comprennent deux doigts 16 et 17 décalés dans un même plan en forme de crochet pouvant être solidarisés amoviblement aux tiges d'ancrage 4, le doigt 16 arrière s'engageant sous la tige arrière 4 et le doigt avant 17 s'engageant sous l'autre tige avant 4.

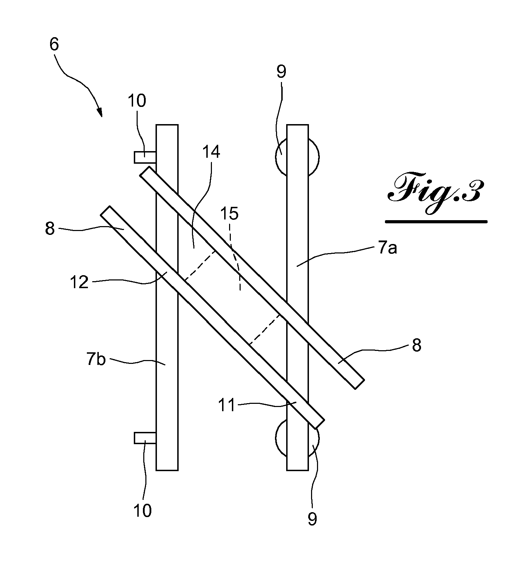

Les deux éléments longilignes 8 rigides sont constitués par des barreaux qui peuvent être fixés de façon amovible perpendiculairement aux deux barres 7a et 7b, comme représenté à la figure 2. Dans une variante représentée sur la figure 3, ils sont fixés à une position inclinée sur les deux barres 7a et 7b d'un angle inférieur à 90° relativement à ces deux barres 7a et 7b. Les moyens de fixation des deux barreaux 8 aux barres 7a et 7b peuvent être constitués, par exemple, par des pions non représentés solidaires des deux extrémités 11 et 12 des deux barreaux et pouvant s'engager dans des perçages réalisés le long des deux barres 7a et 7b.

Les deux barres 7a et 7b et les deux éléments longilignes 8 forment un espace fermé 14 dans lequel peut être logée la roue 15 notamment avant du moyen de transport, pour la bloquer en position verticale.

En d'autres termes, les deux barres 7a et 7b servent de butée au mouvement longitudinal de la roue 15 du moyen de transport logée en position debout dans l'espace fermé 14, et les deux éléments longilignes 8 empêchent son pivotement transversal. Il serait possible de réaliser des barres 7a et 7b permettant le blocage du mouvement longitudinal et transversal de la roue du moyen de transport, sans utiliser les deux éléments longilignes 8. Par exemple, la roue peut être fixée aux deux barres 7a et 7b par des moyens de fixation tels que des attaches.

Les deux éléments longilignes 8 au lieu d'être constitués de deux barreaux, pourraient être remplacés par deux parois parallèles solidaires des deux barres 7a et 7b perpendiculaires, l'essentiel étant que la roue avant 15 du moyen de transport soit bloquée en position verticale à la structure porteuse 6.

Pour implanter le dispositif de l'invention au plancher du véhicule, l'utilisateur enlève tout d'abord un choisi des sièges de la rangée arrière. Il fixe ensuite la structure porteuse préassemblée 6 sur les points d'ancrage 2 du siège arrière retiré en engageant les deux doigts 16 et 17 dans les deux tiges 4, en fixant les pions de centrage 9 dans les perçages P. Puis ensuite, il dispose la roue 15, de préférence avant, du moyen de transport entre les éléments longilignes 8 de la structure porteuse 6 et les deux barres 7a et 7b.

Ainsi, le dispositif de support selon l'invention permet de loger dans une partie arrière 1 de l'habitacle intérieur d'un véhicule un moyen de transport à deux roues en position debout, tel qu'une bicyclette, à la place d'un siège arrière individuel amovible sur les points d'ancrage du siège arrière en bloquant la roue avant du moyen de transport à la structure porteuse. Il est ainsi possible de remplacer tous les sièges arrière par autant de dispositifs de support.

En outre, le dispositif de support permet de rentrer une bicyclette dans l'habitacle de véhicule sans en démonter ses roues. Il permet dans une variante de réalisation de donner un angle à la bicyclette afin qu'elle occupe une place optimum pour permettre de fermer le volet du coffre arrière du véhicule en positionnant les deux éléments longilignes en position inclinée relativement aux deux barres.

Le dispositif de support est rapide à mettre en place, car il est fixé à des points d'ancrage préexistants par des moyens de fixation simples.

Enfin, il permet de protéger la bicyclette des intempéries, et la carrosserie extérieure du véhicule de déformations et de rayures susceptibles de se produire lorsque le dispositif de support est fixé sur la carrosserie extérieure.

## Revendications

1. Dispositif de support d'un moyen de transport à deux roues, tel qu'une bicyclette, dans une partie arrière (1) de l'habitacle d'un véhicule, notamment un véhicule automobile, comprenant une structure porteuse (6) amoviblement fixée au plancher (5) de la partie arrière (1) du véhicule et permettant de maintenir en position debout le moyen de transport, **caractérisé en ce que** la structure porteuse (6) est destinée à supporter une roue du moyen de transport et peut être amoviblement fixée à des points d'ancrage (2) préexistants sur le plancher (5) et destinés à la fixation d'un siège arrière individuel amovible préalablement retiré.

2. Dispositif de support selon la revendication 1, **caractérisé en ce que** la structure porteuse (6) comprend deux barres (7) parallèles pouvant être fixées amoviblement aux points d'ancrage (2) transversalement à la direction longitudinale du véhicule de manière que l'une des roues du moyen de transport, notamment la roue arrière, puisse être positionnée et maintenue en position debout en appui sur et entre les deux barres (7) de la structure porteuse (6).

3. Dispositif de support selon la revendication 2, **caractérisé en ce que** la structure porteuse (6) comprend deux éléments longilignes (8) parallèles et rigides, amoviblement fixés par leurs deux extrémités (11, 12) sur les deux barres (7) parallèles, la structure porteuse (6) permettant d'enserrer la roue (15) du moyen de transport entre les deux barres (7) et les deux éléments longilignes (8).

4. Dispositif de support selon la revendication 3, **caractérisé en ce que** les deux éléments longilignes (8) peuvent présenter relativement aux deux barres (7) au moins deux positions, une position perpendiculaire ou une position inclinée.

5. Dispositif de support selon la revendication 4, **caractérisé en ce que** les deux éléments longilignes (8) sont deux barreaux.

6. Dispositif de support selon l'une des revendications 2 à 5, **caractérisé en ce que** l'une des deux barres (7) comporte au voisinage de ses deux extrémités respectivement deux pions de centrage (9) pouvant être fixés amoviblement dans deux logements (2a) du plancher (5) du véhicule constituant deux des points d'ancrage précités.

7. Dispositif de support selon l'une des revendications 2 à 6, **caractérisé en ce que** l'autre barre (7) comprend au voisinage de chacune de ses extrémités une patte de retenue (10) présentant au moins un doigt en forme de crochet pouvant être solidarisé amoviblement à une tige (4) d'ancrage fixée transversalement sur le plancher (5) du véhicule.

8. Dispositif de support selon la revendication 7, **caractérisé en ce que** la patte de retenue (10) comprend deux doigts (16, 17) en forme de crochet se solidarisant amoviblement à deux tiges (4) d'ancrage espacées et fixées transversalement au plancher (5) du véhicule.

9. Véhicule comprenant un ou plusieurs dispositifs de support d'un moyen de transport tel qu'une bicyclette selon l'une des revendications 1 à 8, fixés à des points d'ancrage (2) préexistants du plancher (5) destinés à la fixation d'un ou de plusieurs sièges arrière amovibles d'une même rangée préalablement retirés.
